(19) Europäisches Patentamt
European Patent Office
Office européen des brevets

(11) Numéro de publication : 0 251 921 B1

(12) # FASCICULE DE BREVET EUROPEEN

(45) Date de publication du fascicule du brevet : **09.01.91 Bulletin 91/02**

(51) Int. Cl.$^5$ : **C08F 8/14**

(21) Numéro de dépôt : **87401499.6**

(22) Date de dépôt : **30.06.87**

(54) **Polymère acrylique partiellement estérifié et ses applications notamment pour la préparation de revêtements.**

(30) Priorité : **01.07.86 FR 8609540**

(43) Date de publication de la demande : **07.01.88 Bulletin 88/01**

(45) Mention de la délivrance du brevet : **09.01.91 Bulletin 91/02**

(84) Etats contractants désignés : **AT BE CH DE ES FR GB GR IT LI LU NL SE**

(56) Documents cités :
**FR-A- 1 401 574**
**FR-A- 2 021 076**
**US-A- 3 028 367**
**US-A- 3 288 736**
**US-A- 4 242 243**

(73) Titulaire : **BASF Peintures + Encres S.A.**
**B.P. 26**
**F-60602 Clermont Cédex (FR)**

(72) Inventeur : **Briche, Didier**
**68 rue de Chaumont**
**F-60270 Gouvieux (FR)**
Inventeur : **Guyomard, Daniel**
**28 rue J. Biondi**
**F-60260 Lamorlaye (FR)**
Inventeur : **Perisse, Philippe**
**115 rue de Clermont**
**F-60600 Breuil le Sec (FR)**
Inventeur : **Pouget, Joel**
**322 rue H. Lambert Boulincourt**
**F-60600 Clermont (FR)**

(74) Mandataire : **Portal, Gérard et al**
**Cabinet Beau de Loménie 55, rue d'Amsterdam**
**F-75008 Paris (FR)**

EP 0 251 921 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un polymère acrylique partiellement estérifié au moyen d'un acide gras naturel ou synthétique et ses applications notamment pour la préparation de revêtements.

Ces revêtements sont particulièrement bien adaptés pour être utilisés sous forme de peintures industrielles et destinées aux véhicules automobiles, camions, tracteurs, avions et, d'une manière générale, à tous les objets qui réclament un revêtement adhérant, à haut brillant, ayant une bonne durabilité en exposition extérieure.

Des compositions acryliques modifiées telles que celles décrites par MILLER & al. (US 3 585 160) décrivent la façon d'attacher un acide gras sur une chaîne acrylique par l'intermédiaire de groupe vinyl oxazolidine. Les revêtements obtenus à partir de ces compositions ont été essentiellement proposés avec un séchage à l'air par oxydation en utilisant un siccatif organo métallique.

Le brevet français (FR 78-03875 BAYER) fait également état de la possibilité d'attacher des acides gras sur une structure acrylique par l'intermédiaire de groupements glycidyl (le glycidyl méthacrylate par exemple).

Le US 4 242 243 (J.A. ANTONELLI) décrit une composition de revêtement d'une haute teneur en matières solides comprenant un polymère ayant un squelette de monomères polymérisés constitué de

35 à 65% en poids d'un méthacrylate d'alcoyle,

10 à 30% en poids d'un méthacrylate d'hydroxyalcoyle ou d'un acrylate d'hydroxyalcoyle ayant chacun 2 à 4 atomes de carbone dans le groupe alcoyle, et

25 à 45% en poids d'acides gras d'huiles siccatives.

Le US 3 288 736 (H.J. WRIGHT) revendique une composition de résine comprenant le produit de l'estérification avec un acide gras, d'un copolymère vinylique constitué (1) d'au moins un monomère éthylénique sans groupe hydroxy et choisi dans le groupe des hydrocarbures aromatiques vinyliques, des esters d'alkyle inférieur de l'acide acrylique ou méthacrylique et de l'acétate de vinyle et (2) d'un monomère insaturé à groupe hydroxy choisi dans le groupe des acrylates ou méthacrylates d'hydroxy alkyle inférieur, des éthers vinyliques d'alcane inférieur polyméthylhydroxy et de l'éther monoallylique pentaerythritol, les rapports de monomères et le degré d'estérification étant tels que ledit produit estérifié a un nombre d'acide inférieur à 20 et un nombre d'hydroxyle compris entre 10 et 90.

Le FR 1 401 574 (ICI) décrit des esters de polymères qui sont des esters d'acides monocarboxyliques non saturés à chaîne longue de mono-esters d'un polyol et d'un acide alpha-substitué, alpha, béta non saturé polymérisé, le groupe substituant de l'acide étant un groupe méthyle ou carbonyloxyméthyle. La chaîne du polymère comprenant l'acide alpha-substitué, alpha, béta non saturé polymérisé peut contenir un ou plusieurs monomères copolymérisés, les comonomères préférés étant le styrène et le vinyl toluène.

Les produits décrits dans l'art antérieur analysé ci-dessus présentent, lors de leur utilisation, divers défauts liés soit à leur structure (emploi de limiteurs de chaînes) soit à la présence de produits de dégradation. De plus lesdits produits ne présentent généralement pas une réactivité suffisante pour pouvoir subir des transformations ultérieures rapides et bénéfiques par réactions naturelles (oxydation) ou provoquées (réactifs).

L'invention permet d'éviter ces inconvénients pour la première fois de manière satisfaisante en proposant un polymère acrylique partiellement estérifié au moyen d'un acide gras naturel ou synthétique (acrylester) obtenu à partir d'au moins un monomère choisi parmi les familles suivantes avec des proportions relatives de :

– 5 à 60% en poids de groupements provenant de la polymérisation oléfinique de styrène ou d'α-méthyl styrène ou de vinyle toluène,

– 10 à 70% en poids de groupements provenant de la polymérisation oléfinique d'un acrylate ou méthacrylate d'hydroxy alkyle dans lequel le groupe alkyle comporte 2 à 12 atomes de carbone et de préférence de 2 à 6 atomes de carbone,

–de 5 à 60% en poids de groupements provenant de la polymérisation oléfinique d'un ou plusieurs alkyl mono, bi ou tri acrylates ou méthacrylates dans lequel le groupe alkyle comporte 2 à 18 atomes de carbone, et de préférence de 2 à 6 atomes de carbone,

caractérisé en ce que ledit polymère est partiellement estérifié, sur ses groupes OH, au moyen d'un acide gras naturel éventuellement modifié ou synthétique, saturé ou insaturé, la quantité d'acide gras utilisée représentant de 10 à 25% en poids dudit polymère partiellement estérifié en vue d'obtenir un produit final ayant un indice d'hydroxyle compris entre 100 et 160.

Un autre objet de l'invention est un procédé de préparation d'un polymére acrylique partiellement estérifié au moyen d'un acide gras, caractérisé en ce qu'il comprend successivement :

a) une polymérisation oléfinique, mise en oeuvre sans limiteur de chaîne, dans un solvant, entre 140

et 160°C avec un catalyseur de polymérisation initiateur de radicaux libres, et

b) une estérification partielle mise en oeuvre dans un solvant entre 165°C et 185°C avec un catalyseur d'estérification.

Ledit catalyseur initiateur de radicaux libres est choisi parmi le groupe constitué du peroxyde de benzoyle (BZ202), du perbenzoate de butyle tertiaire (PBBT), de percarbonates, de peracétates, du 2-éthylhexanoate de tertio butyle peroxyde (TBPEH) et de tertio amylpéroxides.

La réaction est mise en oeuvre dans un solvant tel que la diisobutylcétone, l'éthylamylcétone, l'éthylisoamylcétone et de préférence la méthylisoamylcétone (MIAK).

La seconde étape d'estérification partielle est mise en oeuvre au moyen d'un acide gras naturel éventuellement modifié (par exemple par isomérisation ou standolisation) ou synthétique, saturé ou insaturé (par exemple l'acide gras de soja) en présence d'un catalyseur d'estérification tel que des sels d'étain ou des titanates (par exemple : titanate de butyl, titanate d'isopropyl) et de préférence l'acide butylstannoïque. L'estérification est mise en oeuvre dans un solvant tel qu'un hydrocarbure aromatique, ester, cétone, glycolester avec une préférence pour la méthylisoamylcétone.

Les sels d'étain utilisés sont ceux qui sont particulièrement efficaces autour de 170°C.

On obtient ainsi le polymère principal sous la forme d'un "acrylester" possédant encore des groupements hydroxyles libres et ayant pour formule générale

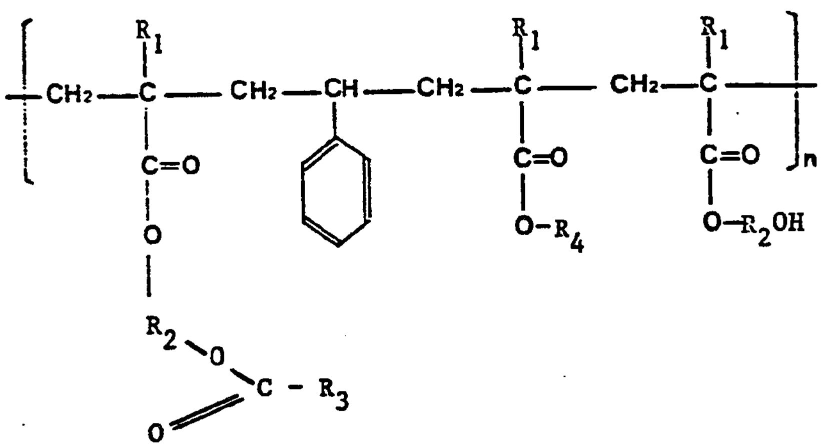

où $R_1$ est un H ou un méthyle,
$R_2$ est un groupe alkyle ayant de 2 à 12 atomes de carbone, et de préférence de 2 à 6 atomes de carbone,
$R_3$ est le radical alkyle de l'acide gras,
$R_4$ est un groupe alkyle ayant de 2 à 18 atomes de carbone, et de préférence de 2 à 6 atomes de carbone.

Le poids moléculaire moyen de l'acrylester de l'invention est compris entre 5000 et 70 000 pour un poids moléculaire en nombre compris entre 3 000 et 15 000, de préférence son poids moléculaire est de l'ordre de 10 000 et le poids moléculaire en nombre de 5 000, sa polydispersibilité est de l'ordre de 2,0 à 7,0 et est donc très faible, pour un produit n'ayant pas recours à l'emploi de limitateur de chaîne (tel que le Mercapto éthanol par exemple).

Les groupements hydroxyles libres peuvent être également utilisés pour favoriser la compatibilité avec d'autres résines, en particulier des résines alkydes.

Une utilisation préférentielle du polymère de l'invention est donc un revêtement constitué du polymère obtenu par polymérisation des monomères précédents avec des groupements OH dont une partie seulement est estérifiée avec une quantité d'acide gras, l'autre partie servant à polymériser le revêtement par polyaddition à l'aide de polyisocyanates ou par polycondensation à l'aide de résines aminoplastes (avec ou sans catalyseur).

Encore un autre objet de l'invention est de rendre insoluble ledit polymère acrylique partiellement estérifié.

L'insolubilisation est obtenue soit :

– par oxydation, soit

– par évaporation avec addition de résine à haut poids moléculaire du type nitrocellulose ou acétobutyrate de cellulose (CAB).

Les monomères ont été sélectionnés pour obtenir une température de transition vitreuse suffisante permettant d'obtenir un revêtement à séchage rapide et une bonne réactivité avec des durcisseurs polyisocyanates essentiellement aliphatiques ou cycloaliphatiques tels que : Biuret d'hexaméthylène diisocyanate ou trimère d'hexaméthylène diisocyanate ou encore les dérivés de l'Isophorone diisocyanate ou de méta ou de paratétraméthyl xylène diisocyanate ou encore les polymères à base d'isocyanato éthyl méthacrylate.

Les autres polyisocyanates aromatiques tels que prépolymère à base de toluène diisocyanate sont également utilisables ainsi que les prépolymères de diphényl méthane diisocyanate hydrogéné ou non, ainsi que tous les durcisseurs bloqués obtenus à partir de ces polyisocyanates et pouvant conduire à des systèmes stables en emballage.

Selon une utilisation préférée du polymère de la présente invention, on prépare un revêtement sous la forme d'une peinture constituée de bases pigmentées destinées aux machines à teinter comprenant par exemple de l'oxyde de titane rutile et des additifs. D'une manière générale, les pigments utilisés par l'Industrie des Peintures sont utilisables avec le polymère faisant l'objet de l'invention.

Les additifs peuvent être :

. des adjuvants de rhéologie : bentonite/silice pyrogénée/ricin hydrogéné.

. des adjuvants d'étalement et de surface :
polyacrylates, polymères siliconés, huile de silicone, solvants lourds,

. des catalyseurs accélérateurs de réaction décrits dans les exemples cités ci-après.

Ledit revêtement, comparé au revêtement à base de polymères acryliques non modifiés, possède les propriétés suivantes :

. meilleure mouillabilité des pigments et des substrats,

. moindre tendance à la formation de cratères,

. versatilité du mécanisme de séchage.

Ces propriétés sont en relation avec le choix monomérique, l'estérification par des acides gras et la forte valeur en OH résiduel dans le polymère principal.

Le bon mouillage des pigments permet d'obtenir des niveaux de pigmentation entraînant des bons pouvoirs opacifiants.

Différentes peintures sont obtenues, selon l'invention, en fonction des mécanismes de séchage correspondant au mode d'insolubilisation dudit polymère acrylique (polyisocyanate, aminoplaste, siccatif, haut polymère).

Le revêtement de l'invention permet également la réalisation de bases vernies et, dans ce cas, le fort pouvoir opacifiant constitue un avantage.

L'invention sera mieux comprise à la lecture des exemples qui vont suivre.

EXEMPLE 1

1.1- Polymère acrylique

Etape 1

| | | |
|---|---|---|
| a) | Méthylisoamylcétone (MIAK) | 30,000 |
| b) | Hydroxyl éthyl méthacrylate (HEMA) | 24,000 |
| | Méthyl méthacrylate (MAM) | 12,900 |
| | Styrène | 20,000 |
| c) | 2-éthylhexanoate de tertio-butyle peroxyde (TBPEH) | 5,000 |
| d) | Méthylisoamylcétone (MIAK) | 5,700 |
| e) | Méthylisoamylcétone (MIAK) | 2,000 |
| | | 100,000 % |

– on charge la méthlisoamylcétone dans un ballon avec agitation, prise de température et ampoule,
– on chauffe le solvant qsp reflux 145-150°C et on introduit régulièrement les monomères (b) et la catalyse (c) en 4 heures,
– on maintient 3 h au reflux et on dilue avec la méthylisoamylcétone (d).

Caractéristiques de contrôle sur produit acrylique intermédiaire

. Extrait sec : 60%
. Visco Gardner : Z 4 (déterminée par la méthode ASTM D 1545)
. Indice d'OH : 175

1.2- Variantes

Ce polymère acrylique de l'étape 1 peut être réalisé avec les matières premières décrites ci-après dans les proportions indiquées.

1.21 Monomères hydroxylés

| | |
|---|---|
| Hydroxy éthyl méthacrylate (HEMA) | 20 - 70 % |
| Hydroxy propyl acrylate (HPA) | 20 - 70 % |
| Hydroxy éthyl acrylate (HEA) | 20 - 70 % |
| Hydroxy propyl méthacrylate (HPMA) | 20 - 70 % |
| 1.4 Butane diol monoacrylate | 20 - 70 % |

ainsi que les mélanges en toutes proportions de ces monomères et d'une manière générale, tous hydroxyl alkyl acryl ou méthacrylate ayant de 2 à 6 carbones.

Dans le cas de mélange de ces monomères, des quantités inférieures peuvent être utilisées.

1.22 Styrène + Alkylmono, bi ou tri acrylate ou méthacrylate

| | |
|---|---|
| Méthacrylate d'éthyle (MAE) | 0 - 60 % |
| MAM | 0 - 60 % |
| MABu | 0 - 60 % |
| Hexane diol diacrylate | 0 - 20 % |
| Styrène | 0 - 60 % |
| Triméthyl propane de triméthyl méthacrylate (TMPTMA) | 0 - 20 % |

Vinyl tolyène/acrylate tertio.butyle/et autres ainsi que tous les mélanges de ces monomères en toutes proportions.

Les monomères ont été sélectionnés pour les raisons suivantes :
. styrène MAE : solubilité et TG (temp. de transition vitreuse)
. HEMA : réactivité, indice d'hydroxyle
. 1,4 Butane diol mono acrylate : pour obtenir une bonne réactivité, particulièrement avec les dérivés de l'IPDI.

1.23 Catalyse

| | |
|---|---|
| Peroxyde de benzoyle (BZ202) | 2 - 10 % |
| Perbenzoate de butyle tertiaire (PBBT) | 4 - 10 % |
| 2-Ethyl hexanoate de tertio butyle peroxyde (TBPEH) | 2 - 10 % |
| t amyl Peroxyde | 2 - 10 % |

Autres catalyses utilisées : percarbonates, peracétates.
Le TBPEH a été choisi :
a) parce que liquide, il s'incorpore facilement, et
b) son efficacité, comme initiateur radicalaire, est adaptée à notre formule.

1.24 Solvants au pied

Le solvant préféré est la Méthylisoamylcétone (MIAK) 15-60%
D'autres solvants peuvent être utilisés, comme par exemple :
L'Ethylamylcétone
La Disobutyl cétone
L'Ethylisoamylcétone

1-25 Conditions de polymérisation

Etudié dans ces limites en Fonction des solvants utilisés : températuture : 140°C-160°C,
Le MIAK a été sélectionné comme le solvant le plus souhaitable en raison de
a) sa température de reflux (142-145°C)
b) son efficacité solvante
c) sa distillation relativement aisée
d) des quantités résiduelles qui ne nuisent en rien à la qualité du produit fini
e) sa bonne stabilité dans le procédé
f) son insolubilité avec l'eau qui permet d'éliminer l'eau d'estérification dans de bonnes conditions.

1.3.- Acrylester

Etape 2

| | |
|---|---|
| Acrylique pré-polymère (à 60% d'extrait sec) | 67,680 |
| Acide gras de soja | 6,500 |
| Acide butyl stannoïque | 0,020 |
| MIAK | 0,300 |
| Xylène | 0,500 |
| | |
| Xylène | 7,500 |
| Solvesso 100 | 9,000 |
| Acétate de butyle | 8,500 |
| | 100,000 % |

. On charge le polymère acrylique.
. On ajoute l'acide gras et le catalyseur d'estérification.

. On élimine le solvant MIAK jusqu'à l'obtention d'une températarature égale à 180°C.
. On maintient cette température pendant 5 heures jusqu'à un indice d'acide en masse ≤ 3.
. On dilue avec des solvants.

Caractéristiques de contrôle

Extrait sec : 60 %

Visco Gardner : Z 2

Longueur en huile *: 15 %

Indice d'OH : 125

* La longueur en huile est exprimée en % en poids d'huile ou d'AG exprimée en triglycérides par rapport à l'extrait sec (partie non volatile)

1.4. - Variante de l'étape : ACRILESTER

1.41 Acides gras

Dans notre exemple, l'acide gras de soja a été choisi
a) pour son prix et
b) pour obtenir une bonne compatibilité pour le mélange avec les résines alkydes moyennes en huile.

L'utilisation de tout acide gras naturel insaturé ou tout acide gras saturé synthétique ou naturel est possible dans des proportions de 10 à 25%.

1.42 catalyse

Le catalyseur préféré est l'acide butyl stannoïque 0,01-1%
Les autres catalyseurs utilisables sont :
les sels d'étain efficaces entre 165°C et 185°C
les titanates :
. titanate de butyle
. titanate d'isopropyle

1.43 Solvants utilisés

Xylène - Toluène - Hydrocarbures aromatiques
Esters : Ac. butyle - isobutyle - amyle
Cétones : MIAK - LAK
Glycols esters : AEG - ABG - AMG

Températrre de polymérisation : 106-220°C.

Temps de réaction - 5 - 20 H.

EXEMPLE 2 - Variation de l'indice d'hydroxyle et du catalyseur de l'acrylester

## 2.1 - Polymère acryLique

Etape 1

| | | |
|---|---|---|
| a) | MIAK | 25,000 |
| b) | MAE | 5,800 |
| | HEMA | 22,300 |
| | MAM | 14,900 |
| | Styrène | 14,900 |
| c) | TBPEH | 6,750 |
| d) | MIAK | 8,350 |
| e) | MIAK | 2,000 |
| | | 100,000 % |

Caractéristiques de contrôle

Extrait sec : 60%
Viscosité : Z 1
Indice d'OH : 160

## 2.2 - Acrylester

Etape 2

| | |
|---|---|
| • Polymère acrylique (à 60% d'extrait sec) | 68,000 |
| • Acide gras de soja | 6,200 |
| • Titanate de butyle | 0,020 |
| • MIAK | 0,300 |
| • Xylène | 0,480 |
| • Xylène | 7,500 |
| • Solvesso 100 | 9,000 |
| • Ac. butyle | 8,500 |
| | 100,000 % |

On effectue ensuite la réaction d'estérification comme indiqué dans l'exemple 1.

Caractéristiques de contrôle

Extrait sec : 60%
Viscosité Gardner : Z
Indice d'OH : 115
Longueur en huile : 15%

EXEMPLE 3

Peinture du type base à mélanger utilisant liant acrylester de l'invention

On utilise à titre d'exemple une seule base pigmentée B 1 blanche contenant de l'oxyde de titane Rutile et une solution d'acrylester correspondant à l'exemple 2 précédent.

Base B 1

| | |
|---|---|
| . Oxyde de titane Rutile | 34 % |
| . Sol. Acrylester à 50 % d'extrait sec | 52 |
| . Additifs | 1-5 |
| . Solvants (mélange d'ester et d'aromatiques) | 11 |
| | 100 |

3.1- Peinture polyuréthane à 2 composants

| | |
|---|---|
| . Base B 1 | 1000 |
| . Durcisseur de type Desmodur N 75 | 200 |
| . Diluant | 200 |

. Extrait sec à l'application : 54 % en poids.

Les autres durcisseurs sont utilisables dans des proportions qui dépendent de leurs matières sèches et de leur équivalent en NCO.

Le rapport OH/NCO est généralement compris entre 0,6 et 1,4.

En résumé, les propriétés obtenues sont :

. Brillant et garnissant : très bons, comparables voire supérieurs aux produits généralement qualifiés de 2 composants pur acryliqueisocyanate.

. extrait sec à l'application : 20% supérieure à la moyenne des produits sur le marché.

. séchage : air 4 H

séchage accéléré : 30 minutes à 60°C - séchage complet dès la sortie de l'étuve permettant une manipulation aisée des surfaces peintes.

. bonne résistance au Super Carburant après 24 h

. Dureté Persoz (selon la norme AFNOR T 30016) :

après 24 H : 160 - 180 sec épaisseurs 50 µm

après 72 H : 210 sec épaisseurs 50 µm

Pour l'ensemble des tests suivants, le liant acrylester donne des résultats comparables ou supérieurs aux systèmes pur-acrylique isocyanate notamment :

- résistance au jaunissement UV, chaleur, humidité
- polishabilité
- durabilité extérieure

4.2- Peinture à un composant séchant à l'air par oxydation

| | |
|---|---|
| . Base B 1 | 1 000 |
| . Solution résine alkyde type A | 550 |
| . Mélange de siccatifs | 20 |
| . Diluant | 250 |

Extrait sec à l'application : 50 %.

Exemple : Résine alkyde type A

. Longueur en huile : 48%
. Type d'huile : soja
. Indice d'OH : 105
. Indice d'acide : 12

Les propriétés obtenues sont comparables ou supérieures à celles obtenues à l'aide de peintures pour carrosseries à un composant en majorité à base de résines alKydes.

| | Propriétés du mélange Acrylester + résine alkyde | A titre d'exemple valeurs moyennes obtenues à l'aide d'un système pur alkyle |
|---|---|---|
| Séchage air | 3 H | 4 H |
| Dureté Persoz après 96 H | 120 sec/50 µm | 100 sec/50 µm |
| Tenue au Super Carburant | Bonne après 120 H | Bonne après 120 H |
| Brillant | 90 % | 85 % |
| Durabilité | Bonne | Bonne |

Des peintures ayant les mêmes propriétés sont réalisables par mélange Acrylester à longueur courte: 20-25% et de longueur d'huile supérieure à 55%.

3.3- Peintures à un composant à séchage rapide à l'air par évaporation

| | |
|---|---|
| . Base B 1 | 1000 |
| . Solution de NC 1/2sec plastifiée à 20 % Extrait sec | 1000 |
| . Diluant | 2500 |

Extrait sec à l'application : 28 %

Les propriétés obtenues sont comparables ou supérieures à celles des peintures nitrocellulosiques destinées aux carrosseries :

Séchage : 1 H
Dureté Persoz après 24 H : 140-150 sec
Tenue au Super Carburant : bonne après 5 H
Brillant à 20° : 60%
Durabilité : bonne
Résistance au jaunissement : meilleure que pour les produits standards nitrocellulosiques.

Cet exemple de peinture à séchage par évaporation est donné en coupage avec de la nitrocellulose.

Ces combinaisons sont également possibles avec des acétobutyrates de cellulose ou des acétopropionates de cellulose ou encore des résines acrylyques thermoplastiques.

Des combinaisons de ces différents produits sont également réalisables.

4.- Combinaisons avec des aminoplastes par poly-condensation

Le polymère acrylester de l'invention ayant un indice d'OH de l'ordre de 120, peut être réticulé par poly-condensation avec les aminoplastes couramment utilisés : mélamine formol éthérifiée, urée formol, benzoguanamine.

| | |
|---|---|
| . Base B1 | 1000 |
| . Mélamine formol à 55 % ES | 280 |
| . Diluant | 250 |

Extrait sec à l'application : 52%

Propriétés obtenues après séchage par four (20 minutes à 130°C)

. Dureté Persoz : 240-260

. Propriétés mécaniques : Erichsen environ 6 mm

. Brillant : 90%

. Tenue au xylène : très bonne.

Les caractéristiques démontrent une haute réactivité rendant de tels systèmes attractifs pour les cuissons à basse température.

Combinaisons avec les aminoplastes catalysés pour séchage à basse température = 40-80°C

Utilisées avec de l'hexaméthoxyméthylmélamine en présence de catalyseurs acides, les peintures peuvent être également durcies par séchage accéléré (30 minutes à 40-80°C).

| | |
|---|---|
| . Base B1 | 1000 |
| . HMMM 100 % | 80 |
| . Diluant catalysé acide (ex:PTSA) | 250 |

Extrait sec à l'application : 55%

Propriétés obtenues après séchage accélé 30 minutes à 60°C

. Dureté Persoz : 210-220 sec

. Propriétés mécaniques : Erichsen environ 6 mm

. Brillant : 90%

. Tenue au xylène : très bonne

Dans les précédents exemples, plusieurs systèmes sont susceptibles de donner des propriétés intéressantes sans utiliser de durcisseur poly-isocyanate, donnant ainsi à ce développement de nombreuses possibilités dans l'hypothèse d'éventuelles nouvelles réglementations concernant l'utilisation des durcisseurs poly-isocyanates.

Bien sûr, diverses modifications peuvent être apportées par l'homme de l'art aux procédés qui viennent d'être décrits à titre d'exemples non limitatifs sans sortir du cadre de l'invention

**Revendications**

1 Procédé de préparation d'un polymère acrylique partiellement estérifié (acrylester) au moyen d'un acide gras naturel ou synthétique, obtenu à partir de monomères choisis parmi les familles suivantes avec des proportions relatives de :

– 5 à 60% en poids de groupements provenant de la polymèrisation olèfinique de styrène ou d'$\alpha$-méthyl styrène ou de vinyl toluène,

– 10 à 70% en poids de groupements provenant de la polymérisation oléfinique d'un acrylate ou méthacrylate d'hydroxy alkyle dans lequel le groupe alkyle comporte 2 à 12 atomes de carbone et de préfèrence de 2 à 6 atomes de carbone,

– 5 à 60% en poids de groupements provenant de la polymérisation olèfinique d'un ou plusieurs alkyl mono, bi ou tri acrylates ou méthacrylates dans lequel le groupe alkyle comporte 2 à 18 atomes de carbone, et de préférence de 2 à 6 atomes de carbone,

caractérisé en ce qu'il comprend successivement :

a) une polymérisation olèfinique, mise en oeuvre sans limiteur de chaîne dans un solvant entre 140 et 160°C avec un catalyseur de polymérisation initiateur de radicaux libres et

b) une estérification partielle dans un solvant entre 165°C et 185°C avec un catalyseur d'estérification; ledit polymère étant partiellement estérifié, sur ses groupes OH, au moyen d'un acide gras naturel éventuellement modifié ou synthétique, saturé ou insaturé, la quantité d'acide gras utilisée représentant de 10 à 25% en poids dudit polymére partiellement estérifié en vue d'obtenir un produit final ayant un indice d'hydroxyle compris entre 100 et 160.

2. Procédè selon la revendication 1, caractérisé en ce que le catalyseur de polymérisation est choisi dans le groupe constitué du peroxyde de benzoyle (BZ202), du perbenzoate de butyle tertiaire (PBBT), de percarbonates, de peracétates et du 2-éthyl-hexanoate de tertio butyle peroxyde (TBPEH) et de tertio amylperoxides.

3. Procédé selon la revendication 1 ou 2, caractérisé en ce que le catalyseur d'estérification est choisi dans le groupe des sels d'étain, des titanates d'alkyle et de l'acide butylstannoïque.

4. Procédé selon l'une des revendications 1 à 3, caractérisé en ce que la polymérisation oléfinique est mise en oeuvre dans un solvant choisi parmi la diisobutylcétone, l'éthylamylcètone, l'éthylisoamylcétone et plus particulièrement la méthylisoamylcètone (MIAK).

5. Procèdé selon l'une des revendications 1 à 4, caractérisé en ce que ladite estérification partielle est mise en oeuvre dans un solvant tel qu'un hydrocarbure aromatique, ester, cétone, glycol ester et méthylisoamylcétone.

6. Procédé selon l'une des revendications 1 à 5, caractérisé en ce que l'acide gras utilisé est un acide gras naturel ou synthétique saturé ou insaturé et plus particulièrement de l'acide gras de soja en quantité comprise entre 10 et 25% en poids du polymère acrylique.

7. Procédé selon l'une des revendications 1 à 6, caractérisé en ce que le produit final est lui-même polymérisé au moyen de polyisocyanates.

8. Polymère acrylique partiellement estérifié (acrylester) au moyen d'un acide gras naturel ou synthétique obtenu à partir de monomères choisis parmi les familles suivantes avec des proportions relatives de

– 5 à 60% en poids de groupements provenant de la polymérisation oléfinique de styrène ou d' -méthyl styrène ou de vinyl toluène,

– 10 à 70% en poids de groupements provenant de la polymérisation oléfinique d'un acrylate ou méthacrylate d' hydroxy alkyle dans lequel le groupe alkyle comporte 2 à 12 atomes de carbone et de préférence de 2 à 6 atomes de carbone,

– 5 à 60% en poids de groupements provenant de la polymérisation oléfinique d'un ou plusieurs alkyl mono, bi ou tri acrylates ou méthacrylates dans lequel le qroupe alkyle comporte 1 à 18 atomes de carbone, et de préférence de 2 à 6 atomes de carbone,

caractérisé en ce que ledit polymère acrylique est partiellement estérifié sur ses groupes OH, au moyen d'un acide gras naturel éventuellement modifié ou synthétique, saturé ou insaturé ; la quantité d'acide gras étant de 10 à 25% en poids dudit polymère partiellement estérifié et ledit polymère acrylique partiellement estérifié ayant un indice d'hydroxyle compris entre 100 et 160.

9. Utilisation du polymère selon la revendication 8 dans un revêtement du type peinture pour carrosserie automobile sous forme de bases à mélanger avec des siccatifs pour obtenir un séchage par oxydation.

10. Utilisation du polymère selon la revendication 8 dans un revêtement du type peinture pour carrosserie automobile sous forme de bases à mélanger avec des résines à haut poids moléculaire (nitrocellulose, acétobutyrate de cellulose) pour obtenir un séchage par évaporation.

**Ansprüche**

1. Verfahren zur Herstellung eines teilweise veresterten Acrylpolymerisats (Acrylesters) mittels einer natürlichen oder synthetischen Fettsäure, erhalten aus Monomeren, ausgewählt aus den folgenden Familien in den jeweiligen Verhältnissen :

– 5 bis 60 Gew.% Gruppen, die von der Olefinpolymerisation von Styrol oder Methylstyrol oder α-Vinyltoluol kommen,

– 10 bis 70 Gew.% Gruppen, die von der Olefinpolymerisation eines Hydroxyalkylacrylats oder -methacrylats, in dem die Alkylgruppe 2 bis 12 Kohlenstoffatome, vorzugsweise 2 bis 6 Kohlenstoffatome umfaßt, kommen,

– 5 bis 60 Gew.% Gruppen, die von der Olefinpolymerisation eines oder mehrerer Mono-, Bi- oder Trialkylacrylats/e oder -methacrylats/e, worin die Alkylgruppe 2 bis 18 Kohlenstoffatome, vorzugsweise 2 bis 6 Kohlenstoffatome umfaßt, kommen, dadurch gekennzeichnet, daß es nacheinander umfaßt :

a) eine Olefinpolymerisation, die ohne Kettenbegrenzer in einem Lösungsmittel zwischen 140 und 160°C mit einem Polymerisationskatalysator zum Katalysieren freier Gruppendurchgeführt wird, und

b) eine Teilveresterung in einem Lösungsmittel zwischen 165°C und 185°C mit einem Veresterungskatalysator ; wobei das Polymerisat an seinen OH-Gruppen mittels einer gesättigten oder ungesättigten, gegebenenfalls modifizierten natürlichen oder synthetischen Fettsäure teilweise verestert wird, wobei die verwendete Menge an Fettsäure 10 bis 25 Gew.% des teilweise veresterten Polymerisats ausmacht, um ein Endprodukt mit einer Hydroxylzahl zwischen 100 und 160 zu erhalten.

2. Verfahren nach Anspruch 1, dadurch gekennzeichnet, daß der Polymerisationskatalysator ausgewählt ist aus der Gruppe bestehend aus Benzoylperoxid (BZ202), tert.Butylperbenzoat (PBBT), Percarbonaten, Peracetaten und tert.Butylperoxid-2-ethyl-hexanoat (TBPEH) und tert.Amylperoxiden.

3. Verfahren nach Anspruch 1 oder 2, dadurch gekennzeichnet, daß der Veresterungskatalysator ausgewählt ist aus der Gruppe der Zinnsalze, der Alkyltitanate und von Butylzinnsäure.

4. Verfahren nach einem der Ansprüche 1 bis 3, dadurch gekennzeichnet, daß die Olefinpolymerisation in einem Lösungsmittel, augewählt aus Diisobutylketon, Ethylamylketon, Ethylisoamylketon und insbesondere Methylisoamylketon (MIAK), durchgeführt wird.

5. Verfahren nach einem der Ansprüche 1 bis 4, dadurch gekennzeichnet, daß die Teilveresterung in einem Lösungsmittel, wie einem aromatischen Kohlenwasserstoff, Ester, Keton, Glykolester und Methylisoamylketon, durchgeführt wird.

6. Verfahren nach einem der Ansprüche 1 bis 5, dadurch gekennzeichnet, daß die verwendete Fettsäure eine gesättigte oder ungesättigte natürliche oder synthetische Fettsäure, insbesondere Sojafettsäure, in einer Menge zwischen 10 und 25 Gew.% des Acrylpolymers ist.

7. Verfahren nach einem der Ansprüche 1 bis 6, dadurch gekennzeichnet, daß das Endprodukt selbst mittels Polyisocyanaten polymerisiert wird.

8. Mit einer natürlichen oder synthetischen Fettsäure teilweise verestertes Acrylpolymerisat (Acrylester), erhalten aus Monomeren, ausgewählt aus den folgenden Familien in den jeweiligen Verhältnissen :

– 5 bis 60 Gew.% Gruppen, die von der Olefinpolymerisation von Styrol oder α-Methylstyrol oder Vinyltoluol kommen,

– 10 bis 70 Gew.% Gruppen, die von der Olefinpolymerisation eines Hydroxyalkylacrylats oder -methacrylats, in dem die Alkylgruppe 2 bis 12 Kohlenstoffatome, vorzugsweise 2 bis 6 Kohlenstoffatome umfaßt, kommen,

– 5 bis 60 Gew.% Gruppen, die von der Olefinpolymerisation eines oder mehrerer Mono-, Bi- oder Trialkylacrylats/e oder -methacrylats/e, worin die Alkylgruppe 2 bis 18 Kohlenstoffatome, vorzugsweise 2 bis 6 Kohlenstoffatome umfaßt, kommen, dadurch gekennzeichnet, daß das Acrylpolymerisat an seinen OH-Gruppen mittels einer gesättigten oder ungesättigten, gegebenenfalls modifizierten natürlichen oder synthetischen Fettsäure teilweise verestert ist, wobei die Menge an Fettsäure 10 bis 25 Gew.% des teilweise veresterten Polymerisats ausmacht und das teilweise veresterte Acrylpolymerisat eine Hydroxylzahl zwischen 100 und 160 hat.

9. Verwendung des Polymerisats nach Anspruch 8 in einem Lacküberzug für Fahrzeugkarosserien in Form von Basen, die zur Erzielung einer Trocknung mittels Oxidation mit Exsikkantien zu mischen sind.

10. Verwendung des Polymerisats nach Anspruch 8 in einem Lacküberzug für Fahrzeugkarosserien in Form von Basen, die zur Erzielung einer Trocknung mittels Verdampfung mit Harzen mit hohem Molekulargewicht (Nitrozellulose, Zelluloseacetobutyrat) zu mischen sind.

## Claims

1. Process for the preparation of an acrylic polymer partially esterified (acrylic ester) by means of a natural or synthetic fatty acid, obtained from monomers chosen from the following classes with relative proportions of :

– 5 to 60% by weight of groups originating from the olefinic polymerization of styrene or of α-methylstyrene or of vinyltoluene,

– 10 to 70% by weight of groups originating from the olefinic polymerization of a hydroxyalkyl acrylate or methacrylate in which the alkyl group contains 2 to 12 carbon atoms and preferably from 2 to 6 carbon atoms,

– 5 to 60% by weight of groups originating from the olefinic polymerization of one or more alkyl mono-, di- or triacrylates or methacrylates, in which the alkyl group contains 2 to 18 carbon atoms and preferably from 2 to 6 carbon atoms,

characterized in that it comprises, successively :

a) an olefinic polymerization carried out without a chain limiter in a solvent between 140 and 160°C with a free-radical polymerization initiator catalyst and

b) a partial esterification in a solvent between 165°C and 185°C with an esterification catalyst ; the said polymer being partially esterified, on its OH groups, by means of a saturated or unsaturated, synthetic or optionally modified natural fatty acid, the quantity of fatty acid employed representing from 10 to 25% by eight of the said partially esterified polymer with a view to obtaining a final product having a hydroxyl number of between 100 and 160.

2. Process according to Claim 1, characterized in that the polymerization catalyst is chosen from the group consisting of benzoyl peroxide ($Bz_2O_2$), of tertiary butyl perbenzoate (TBPB), of percarbonates, of peracetates and of tert-butylperoxy 2-ethylhexanoate (TBPEH) and of tert-amyl peroxides.

3. Process according to Claim 1 or 2, characterized in that the esterification catalyst is chosen from the group of tin salts, of alkyl titanates and of butylstannoic acid.

4. Process according to one of Claims 1 to 3, characterized in that the olefinic polymerization is carried out in a solvent chosen from diisobutyl ketone, ethyl amyl ketone, ethyl isoamyl ketone and more particularly methyl isoamyl ketone (MIAK).

5. Process according to one of Claims 1 to 4, characterized in that the said partial esterification is carried out in a solvent such as an aromatic hydrocarbon, ester, ketone, glycol ester and methyl isoamyl ketone.

6. Process according to one of Claims 1 to 5, characterized in that the fatty acid employed is a saturated or unsaturated natural or synthetic fatty acid and more particularly soya fatty acid in a quantity of between 10 and 25% by weight of the acrylic polymer.

7. Process according to one of Claims 1 to 6, characterized in that the final product is itself polymerized by means of polyisocyanates.

8. Acrylic polymer partially esterified (acrylic ester) by means of a natural or synthetic fatty acid obtained from monomers chosen from the following groups with relative proportions of :

– 5 to 60% by weight of groups originating from the olefinic polymerization of styrene or of α-methylstyrene or of vinyltoluene,

– 10 to 70% by weight of groups originating from the olefinic polymerization of a hydroxyalkyl acrylate or methacrylate in which the alkyl group contains 2 to 12 carbon atoms and preferably from 2 to 6 carbon atoms,

– 5 to 60% by weight of groups originating from the olefinic polymerization of one or more alkyl mono-, di- or triacrylates or methacrylates, in which the alkyl group contains 1 to 18 carbon atoms and preferably from 2 to 6 carbon atoms,

characterized in that the said acrylic polymer is partially esterified, on its OH groups, by means of a saturated or unsaturated, synthetic or optionally modified natural fatty acid ; the quantity of fatty acid being from 10 to 25% by weight of the said partially esterified polymer and the said partially esterified acrylic polymer having a hydroxyl number of between 100 and 160.

9. Use of the polymer according to Claim 8 in a coating of the paint type for motor vehicle bodywork in the form of bases to be mixed with driers to obtain an oxidation drying.

10. Use of the polymer according to Claim 8 in a coating of the paint type for motor vehicle bodywork in the form of bases to be mixed with resins of high molecular weight (nitrocellulose, cellulose acetobutyrate etc) to obtain an evaporation drying.